# EUROPÄISCHE PATENTSCHRIFT

(11) **EP 3 261 500 B1**
(45) Veröffentlichungstag und Bekanntmachung des Hinweises auf die Patenterteilung: **02.01.2019**
(21) Anmeldenummer: 16703563.3
(22) Anmeldetag: 10.02.2016
(51) Int. Cl.: A47J 31/60

(54) **GETRÄNKEZUBEREITUNGSMASCHINE**
MACHINE FOR MAKING BEVERAGES
MACHINE DE PRÉPARATION DE BOISSONS

(30) Priorität: 24.02.2015 EP 15156232
(43) Veröffentlichungstag der Anmeldung: 03.01.2018
(73) Patentinhaber: Tchibo GmbH, 22297 Hamburg (DE)
(72) Erfinder: DEUBER, Louis, 8805 Richterswil (CH)
(74) Vertreter: Frei Patent Attorneys
(86) Internationale Anmeldenummer: PCT/EP2016/052816
(87) Internationale Veröffentlichungsnummer: WO 2016/134971

(56) Entgegenhaltungen:
- DE-U1-202012 103 944
- DE-U1-202014 106 197

## Beschreibung

Die meisten Reparaturfälle an Kaffee- Tee- und anderen Getränkezubereitungsmaschinen sind auf schlechte Pflege und Unterhalt der Geräte zurückzuführen. Besonders häufig ist ein Verkalken der Geräte. Aus diesem Grund stellen Hersteller von Getränkezubereitungsmaschinen zur Zubereitung von Getränken mittels Extraktion in einer Portionskapsel meist Entkalkungssysteme zur Verfügung. Bei solchen wird ein Entkalkungsmittel im von der Maschine verwendeten Wasser gelöst und dieses aufgeheizt und durch die Brüheinheit der Maschine gepumpt. Es sind nebst Entkalkungssystemen auch Reinigungssysteme bekannt, die auf einem ähnlichen Prinzip beruhen.

Ein solcher Entkalkungszyklus stellt jedoch einen durchaus beträchtlichen Aufwand für den Benutzer dar. Eine gute und effektive Entkalkung der Geräte benötigt nach Angaben der Gerätehersteller bis zu 40 Minuten. Hinzu kommt, dass für einen sauberen Entkalkungsprozess (wie auch einen entsprechenden Reinigungsprozess) der Anwender jeweils ein Gefäss unter der Getränkeauslauf stellen muss, um das auslaufende, mit dem Entkalkungs- bzw. Reinigungsmittel versetzte und unter Umständen schmutzige Wasser aufzufangen. Ein solches Gefäss muss an sich das Volumen des ganzen die Entkalkungs- bzw. Spülwassers umfassen, in der Regel mehr als ein Liter. Das ist aber in der Praxis oft gar nicht so einfach, da das unter den Auslauf gestellt werden muss und gleichzeitig einigermassen gerade stehen sollte um die Flüssigkeit aufnehmen zu können. Oft muss ein Benutzer während des Zyklus das Gefäss daher gar wechseln oder leeren, was zusätzlich mühsam ist.

Oft greift der Benutzer darauf zurück, die Flüssigkeit in den Abtropfbehälter unter der Ablage für die Getränketasse laufen zu lassen, was nur schon aufgrund des beschränkten Fassungsvermögens, aber auch aufgrund der schwierigen Handhabbarkeit des im vollen Zustand leicht überschwappenden flachen Abtropfbehälters unbefriedigend ist.

Den Gebrauch des Abtropfbehälters lehrt auch die EP 2 265 158, die im Übrigen eine Kaffeemaschine zum Gegenstand hat, bei welcher ein Entkalkungsmittel in der Maschine und auf einem Flüssigkeitspfad integriert wird, insbesondere in Form einer Kartusche mit dem Entkalkungsmittel. Dieses Vorgehen soll dem Benutzer den Prozess vereinfachen, da er nicht gesondert Entkalkungs- und Frischwasser (für das anschliessende Spülen) einfüllen muss. Die eingangs geschilderten Probleme mit dem Gefäss, von welchem die gebrauchte Flüssigkeit aufgefangen werden soll, löst er jedoch nicht; ausserdem ist dieser Ansatz nur für kleine Spülflüssigkeitsmengen verwendbar, was wiederum die Wirksamkeit beeinträchtigen kann.

In DE 20 2012 103 944 U1 wird ein Kaffee-Vollautomat beschrieben. Dieser weist einen Tresterbehälter für verbrauchte Filterkuchen auf. Als Einsatz in einen solchen ist ein Sammelbehälter eingelegt. Durch eine ausfahrbare Flüssigkeitsauffangeinrichtung kann für einen Spülvorgang Flüssigkeit vom Auslauf in diesen Sammelbehälter geleitet werden, damit die ein Restflüssigkeitssammelbehälter (,dip tray') nicht mit dieser belastet bzw. gar nicht mehr benötigt wird. Die Lösung mit ausfahrbarer Flüssigkeitsauffangeinrichtung ist jedoch aufwendig, und ausserdem benötigt der Sammelbehälter Platz, der eigentlich für verbrauchte Filterkuchen vorgesehen wäre. Für Portionskapselsysteme - mit einem grösseren Platzbedarf für die Kapsel im Vergleich zu Filterkuchen und mit meist insgesamt kleineren Kaffeemaschinen - kommt diese Lösung nur schon deshalb nicht in Frage

In der Summe stellt sich der Entkalkungs- oder Reinigungsprozess als aufwendig und zeitraubend und auch nicht immer wirkungsvoll dar, weshalb eine Mehrheit der Benutzer nach einer gewissen Zeit aus Bequemlichkeit ganz auf ihn verzichtet.

Hier setzt die vorliegende Erfindung an. Es ist eine sich der Erfindung stellende Aufgabe, einen Ansatz zur Verfügung zu stellen, welcher Nachteile des Standes der Technik überwindet und welcher insbesondere dem Benutzer die Reinigung und/oder Entkalkung der Kaffeemaschine erleichtert. und so auch animiert, die Getränkezubereitungsmaschine den Empfehlungen des Herstellers entsprechend effizient zu pflegen.

Diese Aufgabe wird gelöst durch die in den Patentansprüchen definierte Getränkezubereitungsmaschine.

Eine Getränkezubereitungsmaschine der erfindungsgemässen Art ist als Getränkezubereitungsmaschine zum Zubereiten eines Getränks, insbesondere eines Heissgetränks wie Kaffee oder Tee, aus einer Portionskapsel ausgebildet. Sie beinhaltet eine Brühkammer zum Einlegen der Portionskapsel sowie einen Wasserbehälter, eine Pumpe und ein Wassererhitzungsmittel (Durchlauferhitzer oder Boiler), wobei durch die Pumpe und das Wassererhitzungsmittel im Wasserbehälter enthaltenes Wasser erhitzbar und in die Brühkammer förderbar ist, sowie einen Getränkeauslass, aus welchem das in der Brühkammer aus dem erhitzten Wasser gebrühte Heissgetränk - oder auch ein ohne Erhitzen des Wasser zubereitetes Kaltgetränk - in ein darunter abgestelltes Trinkgefäss gelangt. Weiter weist die Getränkezubereitungsmaschine einen in einer Ausgangsstellung für einen Betriebszustand der Getränkezubereitungsmaschine unter der Brühkammer angeordneten, entfernbaren, nach oben offenen Auffangbehälter auf, in welchen nach erfolgtem Brühvorgang, bspw. durch Öffnen der Brühkammer, eine verbrauchte Kapsel auswerfbar ist.

Die Getränkezubereitungsmaschine zeichnet sich dadurch aus, dass der Auffangbehälter flüssigkeitsdicht ist und zwischen der Ausgangsstellung und einer Flüssigkeitsaufnahmestellung, in welcher er positionsstabil unterhalb des Getränkeauslasses angeordnet ist, bewegbar ist.

Auffangbehälter für gebrauchte Kapseln sind an sich bekannt und in Kapselkaffeemaschinen vorhanden. Diese sind bspw. seitlich an der Kaffeemaschine oder unter Entfernung der Abtropfschale nach vorne herausziehbar und weisen oft untenliegende Abfliessöffnungen auf, durch welche in den Auffangbehälter aus den gebrauchten Kapseln heraustropfende Flüssigkeit abgeführt werden kann, bspw. in den darunter liegenden Abtropfbehälter. Das Konzept gemäss der vorliegenden Erfindung beruht nun darauf, diesem ohnehin vorhandenen, und ein beträchtliches Volumen in Anspruch nehmenden, Auffangbehälter eine Doppelfunktion einzuräumen. Einerseits dient er der Aufnahme der gebrauchten Kapseln und ist entsprechend angeordnet. Andererseits nimmt der während eines Entkalkungs- oder Reinigungsvorgangs die Funktion des Flüssigkeitsauffangbehälters wahr.

Besonders elegant an diesem Ansatz ist, dass sich der Auffangbehälter auch in der Flüssigkeitsaufnahmestellung hinter die Frontfläche der Getränkezubereitungsmaschine (in deren betriebsbereiten Zustand) erstrecken kann, d.h. es wird auch Volumen genutzt, das quasi 'innerhalb' der Kaffeemaschine liegt. Daher kann der als Flüssigkeitsauffangbehälter dienende Auffangbehälter ein genügend grosses Volumen zur Aufnahme auch einer grösseren Flüssigkeitsmenge von bspw. 11 oder mehr aufweisen, ohne dass dafür eigens die Tiefe der Abstellfläche für das Trinkgefäss angepasst werden müsste (was ästhetisch unbefriedigend wäre) und ohne dass die Höhe des Getränkeauslasses vergrössert werden müsste (was aus verschiedenen Gründen unerwünscht wäre).

Dies steht im Gegensatz zu einem separaten Gefäss, welches in seiner Höhe ebenfalls durch die Höhe des Getränkeauslasses beschränkt ist, welches aber auf der Abstellfläche vor der Frontfläche abgestellt werden muss und daher nur ein beschränktes Volumen aufweisen kann oder dann schräg zwischen Abstellfläche und Unterlage abgestellt werden muss, was immer wieder ein Ärgernis ist.

Die Bewegung zwischen der Ausgangsstellung und der Flüssigkeitsaufnahmestellung erfolgt insbesondere geführt, bspw. durch entsprechende Partien eines Gehäuses der Getränkezubereitungsmaschine. Insbesondere kann die Bewegung eine einzige lineare, seitlich geführte Zug- oder eventuell Schwenkbewegung sein. In beiden Fällen kann vorgesehen sein, dass der Auffangbehälter auch in der Flüssigkeitsaufnahmestellung geführt ist, d.h. von der Flüssigkeitsaufnahmestellung nur entweder gerichtet zurück in die Ausgangsstellung oder von der Getränkezubereitungsmaschine weg bewegbar ist.

Die Flüssigkeitsaufnahmestellung ist mindestens innerhalb vorgegebener Toleranzen, definiert, bspw. durch einen Anschlag, ein mechanisches oder magnetisches Rastsystem, eine optische Markierung und/oder durch einen Positionssensor, der beim Erreichen der Flüssigkeitsaufnahmestellung über eine Steuerung der Getränkezubereitungsmaschine ein entsprechendes Feedbacksignal auslöst.

Es kann insbesondere vorgesehen sein, dass sich die Ausgangsstellung und die Flüssigkeitsaufnahmestellung auf gleicher Höhe befinden.

In der Flüssigkeitsaufnahmestellung kann der Auffangbehälter vorderseitig auf einer Abstellfläche ruhen, welche ansonsten dazu dient, ein Trinkgefäss aufzunehmen, in welches das Getränk abgegeben wird. Zu diesem Zweck kann sich die Unterseite des Auffangbehälters auch in der Ausgangsstellung auf einer Höhe befinden, welche der Höhe der Abstellfläche entspricht.

Wie an sich bekannt kann eine solche Abstellfläche als Abtropfgitter mit einem darunter liegenden Auffangbehälter (Abtropfbehälter) für Flüssigkeitstropfen ausgebildet sein, d.h. mit entsprechenden Durchlässen für die Flüssigkeit in einen solchen Abtropfbehälter versehen sein.

Bevorzugt befindet sich der Auffangbehälter in der Flüssigkeitsaufnahmestellung direkt und unmittelbar (vertikal) unter dem Getränkeauslass; es ist jedoch nicht ganz ausgeschlossen, dass die Flüssigkeitsaufnahmestellung gegenüber dem Getränkeauslass horizontal auf definierte Weise versetzt ist und die Getränkezubereitungsmaschine Mittel aufweist, bspw. ein dazu vorgesehenes Anschlussröhrchen, um die Flüssigkeit vom Auslass in den Kapselauffangbehälter zu leiten.

Das Bringen des Auffangbehälters in die Flüssigkeitsaufnahmestellung ist ein durch die Getränkezubereitungsmaschine vorgesehenes Mittel zum Durchführen eines Entkalkungs- und/oder eines Reinigungsprozesses. Zu diesem Zweck kann insbesondere eine Bedienungsinformation in Form einer Bedienungsanleitung oder eines in der Getränkezubereitungsvorrichtung oder einem separaten Gerät (das für eine Kommunikation der Getränkezubereitungsvorrichtung eingerichtet ist, bspw. ein Mobiltelefon (bspw. Smartphone) mit entsprechendem Programm (App)) vorhandenen Steuerungsprogramm vorhanden sein. Eine solche Bedienungsinformation beinhaltet insbesondere, dass der Benutzer aufgefordert wird, unter bestimmten Umständen den Auffangbehälter in die Flüssigkeitsaufnahmestellung zu bringen. Eine solche Aufforderung kann insbesondere über eine Ein- und Ausgabeeinrichtung erfolgen, welche zur Getränkezubereitungsmaschine gehört oder mit dieser in Kommunikationsverbindung steht; die Maschine ist dann eingerichtet, als Teil eines Entkalkungs- und/oder Reinigungsprozesses eine solche Bedienungsinformation über die Ein- und Ausgabeeinrichtung auszugeben und damit den Benutzer anzuleiten, den Auffangbehälter für einen Entkalkungsprozess und/oder einen Reinigungsprozess in die Flüssigkeitsaufnahmestellung zu bringen.

Der Auffangbehälter ist in Ausführungsformen so dimensioniert, dass sein Füllvolumen mindestens etwa dem Nutzvolumen des Wasserbehälters entspricht, d.h. dem Volumen des Wasserbehälters oder dem vorgesehenen Maximalvolumen, also dem Volumen der Flüssigkeit, welche den Wasserbehälter bis zu einer bestimmten Markierung ("Max." oder dergleichen) füllt. Bevorzugt ist das Füllvolumen des Auffangbehälters gar etwas grösser als das Nutzvolumen des Wasserbehälters, bspw. um mindestens 5% oder mindestens 10%. Bspw. für kleinere Getränkezubereitungsmaschinen kann auch vorgesehen sein, dass pro Vorgang mehrere Entleerungen vorgesehen sind, wobei dann die Steuerungssoftware der Getränkezubereitungsmaschine entsprechend angepasst ist und bei vollem Auffangbehälter der Vorgang unterbrochen und der Benutzer aufgefordert wird, dass eine Entleerung gemacht werden muss, bevor der Vorgang fortgesetzt wird. Insbesondere kann für solche Ausführungsformen der Auffangbehälter-Füllvolumen mindestens halb so gross sein wie ein Nutzvolumen des Wasserbehälters.

Weiter ist ergänzend oder alternativ dazu auch möglich, dass pro Vorgang der Wassertank mehrmals aufgefüllt werden muss, wobei dann ebenfalls der Vorgang unterbrochen und der Benutzer zum entsprechenden Handeln (Auffüllen, bspw. auch Entleeren) aufgefordert wird, wenn eine dem Wasserbehälter-Nutzvolumen entsprechendes Flüssigkeitsvolumen bereits gefördert wurde.

In Ausführungsformen ist ein Sensor vorhanden, welcher detektiert, ob sich der Auffangbehälter in der Flüssigkeitsaufnahmestellung befindet. Ein solcher Sensor kann bspw. durch einen sogenannten Mikroschalter gebildet sein, der auf einem an sich bekannten Prinzip beruhen und mechanisch oder magnetisch betätigbar sein kann. Es kann vorgesehen sein, dass die Steuerung der Getränkezubereitungsmaschine so eingerichtet ist, dass sie für einen Entkalkungs- und/oder Reinigungsprozess voraussetzt, dass der Auffangbehälter in der Flüssigkeitsaufnahmestellung ist.

Es kann ausserdem vorgesehen sein, dass die Steuerung ein Entkalkungs- und/oder ein Reinigungsprogramm aufweist, in welchem in einem vorgesehen Ablauf über eine gewisse Zeit immer wieder Flüssigkeit gefördert wird; wobei die während dieses Programms geförderte Flüssigkeitsmenge auf die - ihrerseits aufeinander abgestimmten - Volumina des Wasserbehälters und des Auffangbehälters abgestimmt ist. In Ausführungsformen mit dem Sensor kann vorgesehen sein, dass das Programm unterbrochen wird und ein entsprechendes Signal ausgegeben wird, wenn der Auffangbehälter entfernt oder in die Ausgangsstellung zurückbewegt wird. Die Brühkammer wird bspw. zwischen einer Extraktionsvorrichtung und einer relativ zu dieser zwischen einer Einwurfstellung und einer Brühstellung bewegbaren Injektionsvorrichtung gebildet sein. Sie kann in ihrer Dimensionierung auf die verwendete Portionskapsel abgestimmt sein. Weiter kann sie eine im Betrieb an die Kapsel anliegende Dichtung bilden, welche verhindert, dass unter Druck in die Injektionsvorrichtung eingeleitetes Brühwasser an der Kapsel vorbei zur Extraktionsseite gelangt. Ausserdem kann sie in an sich bekannter Art Anstechmittel zum Anstechen der Portionskapsel aufweisen. Sie kann insbesondere als Brühkammer eines horizontalen Brühmoduls ausgebildet sein, in welches die Portionskapsel von oben eingebracht wird, welche während des Brühprozesses in im Wesentlichen horizontaler Richtung durchflossen wird, und aus welchem die Portionskapsel nach unten in den Auffangbehälter fällt. Die Brühkammer kann jedoch auch eine Brühkammer eines vertikalen Brühmoduls ausgebildet sein, in welchem die Portionskapsel in im Wesentlichen vertikaler Richtung durchflossen wird.

Ein Gehäuse der Getränkezubereitungsmaschine kann ausserdem, insbesondere oberseitig, eine Einwurföffnung bilden, durch welche die Portionskapsel eingeworfen werden kann und von welcher sie in die Brühkammer gelangt, wobei optional vorgesehen sein kann, dass die Kapsel nach ihrem Einwurf in eine Zwischenposition gelangt, wobei weitere Verfahrensschritte stattfinden können, bevor sie von dort in die Brühkammer gelangt bspw. eine Kapselerkennung.

Ebenfalls Gegenstand der vorliegenden Erfindung ist ein Verfahren zum Durchführen eines Entkalkungs- und/oder eines Reinigungsvorgangs in einer Getränkezubereitungsmaschine der in diesem Text beschriebenen Art, wobei der Auffangbehälter vor dem Durchleiten der Entkalkungs- oder Reinigungsflüssigkeit in die Flüssigkeitsaufnahmestellung bewegt wird.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1: eine Ansicht der Getränkezubereitungsmaschine;
- Fig. 2: Seitenansicht der Getränkezubereitungsmaschine mit schematisch dargestelltem Mikroschalter;
- Fig. 3: Eine Ansicht der Getränkezubereitungsmaschine mit herausgezogenem Auffangbehälter;
- Fig. 4: eine Seitenansicht der Getränkezubereitungsmaschine mit herausgezogenem Auffangbehälter;
- Fig. 5: ein Schema der Steuerung der Getränkezubereitungsmaschine; und
- Fig. 6: ein Schema der Getränkezubereitungsmaschine.

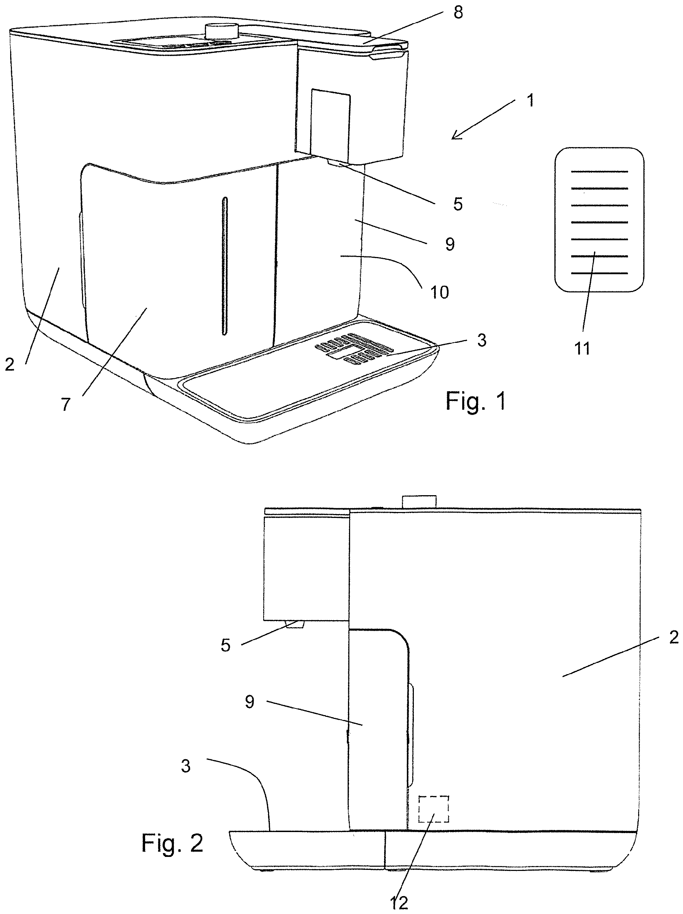

Die Getränkezubereitungsmaschine 1 gemäss **Figur 1** ist beispielsweise eine Portionskapsel-Kaffeemaschine der an sich bekannten Art mit horizontalem Brühmodul.

Sie weist nebst einem Gehäuse 2 eine Abstellfläche 3 für ein Trinkgefäss auf, hier mit Abtropfgitter und darunter liegendem (in der Figur abgedecktem) Auffangbehälter (Abtropfbehälter) für Flüssigkeitstropfen. Über der Abstellfläche befindet sich ein Getränkeauslass 5 durch welchen ein Getränk, beispielsweise Kaffee in das Trinkgefäss gelangt. Ein Wasserbehälter 7 ist im dargestellten Ausführungsbeispiel für das Befüllen und Reinigen nach vorne hin abziehbar. Daneben befindet sich ein Auffangbehälter 9 für gebrauchte Getränkekapseln. In diesen gelangt eine Kapsel, nachdem sie für den Brühprozess in die im Innern der Getränkezubereitungsmaschine angeordnete Brühkammer gelangt ist und nach dem Brühprozess nach unten fällt, wie das an sich für Getränkezubereitungsmaschinen mit horizontalem Brühmodul bekannt ist.

Der Wasserbehälter 7 und der Auffangbehälter 9 bilden in der dargestellten Ausführungsform auch die Frontfläche 10 der Getränkezubereitungsmaschine, vor welcher ein Trinkgefäss, bspw., wenn die Maschine eine Kaffeemaschine ist, eine Kaffeetasse abgestellt wird. Insbesondere wird in vielen Ausführungsformen mindestens die Vorderseite des Auffangbehälters diese Frontfläche bilden.

In Fig. 1 sieht man auch einen Bedienhebel 8, durch welchen die Brühkammer geöffnet werden kann, wobei im in den Figuren dargestellten heruntergeklappten Zustand des Bedienhebels gleich auch eine Einwurföffnung zum Einwerfen der Kapsel in die dann offene Brühkammer verdeckt wird.

**Figur 2** zeigt zusätzlich zu den erwähnten Elementen noch schematisch einen Auffangbehälter-Sensor 12 (bspw. in Form eines Mikroschalters), welcher detektiert, ob sich der Auffangbehälter in der in Figuren 1 und 2 gezeichneten Ausgangsstellung oder in der Flüssigkeitsaufnahmestellung (der herausgezogenen Stellung) gemäss den nachfolgenden Figuren befindet.

Zur Getränkezubereitungsmaschine gehört auch eine in Figur 1 schematisch dargestellte Bedienungsinformation 11. Diese kann als Bedienungsanleitung in Papierform oder elektronisch, bspw. herunterladbar vorhanden sein, oder als Bedienungshilfe in ein "App" (d.h. ein Computerprogramm, insbesondere für die Steuerungselektronik der Getränkezubereitungsmaschine selbst oder aber für ein mobiles Gerät) integriert oder in noch einer anderen Form vorliegen.

Die Bedienungsinformation 11 leitet den Benutzer einerseits an, bei Vornahme einer Entkalkung oder einer Reinigung der Brühkammer den Auffangbehälter in die Flüssigeitsauffangstellung zu bringen, d.h. hier um die Tiefe der Abstellfläche 3 herauszuziehen. Andererseits kann die Bedienungsinformation auch Angaben darüber beinhalten, wann ein Entkalkungs- und/oder ein Reinigungszyklus durchgeführt werden muss. Besondere Möglichkeiten ergeben sich bspw. diesbezüglich in Ausführungsformen, in denen die Bedienungsinformation in ein App integriert ist, das von der Getränkezubereitungsmaschine erhältliche Informationen verarbeitet (indem das App bspw. auf der Getränkezubereitungsmaschine selbst läuft oder auf einem mit der Getränkezubereitungsmaschine in Kommunikationsverbindung bringbaren, insbesondere mobilen Gerät). In solchen Ausführungsformen kann vorgesehen sein, dass dieses Programm den Benutzer wenn die Zeit für eine Entkalkung oder Reinigung gekommen ist, anregt, einen entsprechenden Zyklus einzuleiten und ihn gleich anleitet, unter anderem den Auffangbehälter in die Flüssigkeitsaufnahmestellung zu bringen.

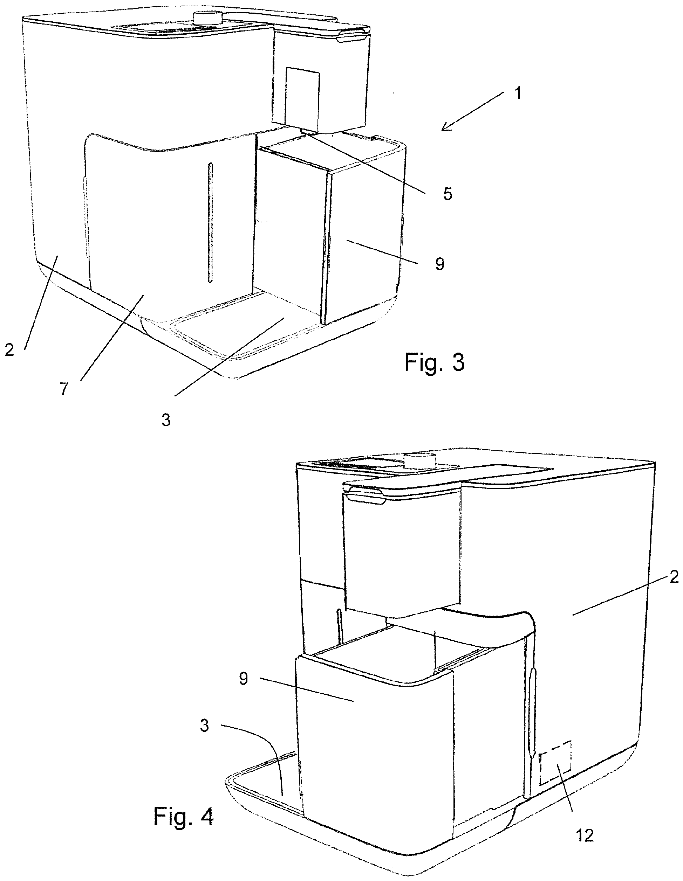

**Figur 3** zeigt ebenso wie **Figur 4** die Getränkezubereitungsmaschine mit dem Auffangbehälter in der Flüssigkeitsaufnahmestellung. Der Auffangbehälter 9 ist becherartig ausgebildet, d.h. er weist einen Boden und eine umlaufende Wand auf und ist gegen oben offen. Im dargestellten Ausführungsbeispiel entspricht die Fläche der Öffnung nach oben gar der ganzen Grundfläche des Auffangbehälters. Alternativ könnte er sich auch gegen oben verengen oder einen Deckel mit einer Einfliessöffnung aufweisen. Das Füllvolumen des Auffangbehälters entspricht mindestens etwa dem Nutzvolumen des Wasserbehälters (d.h. dem Volumen des Wasserbehälters oder dem Volumen der Flüssigkeit, welche diesen bis zu einer bestimmten Markierung ("Max." oder dergleichen) füllt. Bevorzugt ist das Füllvolumen des Auffangbehälters mindestens etwa 10% grösser als das Nutzvolumen des Wasserbehälters.

Der Auffangbehälter 9 steht unmittelbar unter dem Auslass 5, so dass über den Auslass abgegebene Flüssigkeit ohne Hilfsmittel in den Auffangbehälter gelangt. In dieser Stellung ist der Auffangbehälter durch das Gehäuse 2 geführt und steht flach, gerade (mit der Bodenfläche parallel zur Fläche, auf welcher die Getränkezubereitungsmaschine abgestellt ist) und orientierungsstabil auf der Abstellfäche 3. Der Sensor 12 ist bspw. so angeordnet, dass er erkennt, wenn sich der Auffangbehälter 9 in der korrekten Stellung befindet. Die Elektronik kann eingerichtet sein, den Entkalkungs- bzw. Reinigungsvorgang nur zuzulassen, wenn der Sensor meldet, dass die entsprechende Position eingenommen wird, und/oder ein Warnsignal abzugeben, wenn das nicht der Fall ist. In Ergänzung oder alternativ können weitere Sensoren vorhanden sein, die feststellen, ob der Auffangbehälter in der Ausgangsstellung (für den Normalbetrieb) ist, und/oder ob der Auffangbehälter ganz entfernt wurde.

Insbesondere in Figur 4 sieht man auch, dass sich der Auffangbehälter 9 in der Flüssigkeitsaufnahmestellung nicht nur über die Tiefe der Abstellfläche 3 erstreckt, sondern von der Fläche, die im Ausgangszustand die Frontfläche 10 bildet (Fig. 1) weiter nach hinten ins Gehäuseinnere. Durch diesen Aufbau wird im Vergleich zu einem gemäss dem Stand der Technik separaten Gefäss ein deutlich grösseres Volumen nutzbar, ohne dass die Positionsstabilität beeinträchtigt würde.

Nach Beendigung des Entkalkungs- oder Reinigungsvorgangs kann der Auffangbehälter ganz herausgezogen und entleert werden.

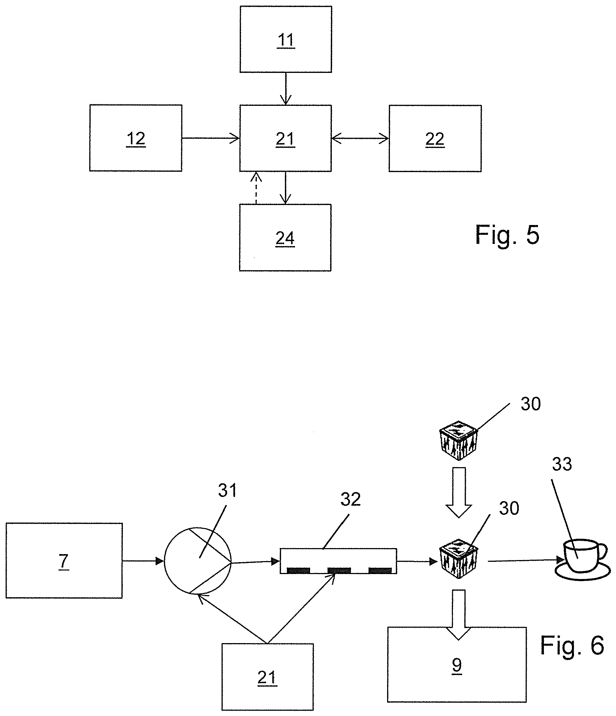

**Figur 5** zeigt sehr schematisch die Steuerung der Getränkezubereitungsmaschine. Eine Steuerungseinheit 21 steht in Verbindung mit einer Ein- und Ausgabeeinheit 22, über welche der Benutzer einerseits die Getränkezubereitungsmaschine bedient und andererseits Informationen erhält. Die Ein- und Ausgebeeinheit kann an der Getränkezubereitungsmaschine Display- und Bedienelemente aufweisen - bspw. einen "Touch Screen", und/oder sie kann eine Schnittstelle zu einem separaten Gerät, bspw. einem mobilen Gerät (Mobiltelefon oder ähnlich) aufweisen, über welches der Benutzer die Getränkezubereitungsmaschine bedient und/oder Informationen von der Getränkezubereitungsmaschine dargestellt bekommt. Die Steuerungseinheit 21 steuert die aktiven Elemente 24 (Pumpe, Wassererhitzungsmittel, ggf. weitere Mittel wie einen optionalen elektrischen Antrieb zum Verschliessen der Brühkammer, optionale Kapselerkennungsmittel etc.) der Getränkezubereitungsmaschine an. Je nach Ausgestaltung der aktiven Elemente 24 können diese auch Signale/Daten zurück an die Steuerungseinheit geben (gestrichelter Pfeil in Fig. 5).

Der Steuerungseinheit stehen beispielsweise Bedieninformationen 11 zur Verfügung, die unter entsprechenden Voraussetzungen über die Ein- und Ausgabeeinheit 22 dargestellt werde. Bspw. kann das beinhalten, dass nach einer gewissen Anzahl von Brühprozessen - unter Umständen abhängig von der Wasserhärte - der Benutzer auf die Notwendigkeit eines Entkalkungsvorgangs aufmerksam gemacht wird und nach einer entsprechenden Bestätigung durch den Benutzer - die dieser ebenfalls über die Ein- und Ausgabeeinheit vornimmt - diesen durch den Entkalkungsprozess führt, wozu gehört, dass er angeleitet wird, den Auffangbehälter in die Flüssigkeitsaufnahmestellung zu bewegen und ggf. ein entsprechendes Feedback erhält, wenn der Sensor 12 eine solche Bewegung detektiert.

**Figur 6** zeigt noch ein Schema der Getränkezubereitungsmaschine. Diese weist nebst dem Wassertank 7, eine Pumpe 31 zum Zuführen von Brühwasser zur Injektionsvorrichtung und ein Wassererhitzungsmittel 32 (bspw. einen Durchlauferhitzer) auf. Eine Portionskapsel 30, im gezeichneten Ausführungsbeispiel gemäss WO 2010/118543, wobei die Ausgestaltung der Kapsel jedoch keinen Einfluss auf das erfindungsgemässe Vorgehen hat, wird von oben in die Brühkammer eingeworfen, wo sie vom erhitzten, von der Pumpe geförderten Brühwasser durchströmt wird und sich aufgrund eines Extraktionsprozesses ein Brühgetränk ergibt, welches durch den Getränkeauslass in ein darunter auf der Abstellfläche abgestelltes Trinkgefäss 33 gelangt. Nach dem Brühprozess wird die Portionskapsel nach unten in den Auffangbehälter 9 ausgeworfen.

## Patentansprüche

1. Getränkezubereitungsmaschine (1) zum Zubereiten eines Getränks aus einer Portionskapsel, aufweisend
- eine Brühkammer zum Einlegen der Portionskapsel,
- einen Wasserbehälter (7),
- eine Pumpe (31),
- und ein Wassererhitzungsmittel (32),
∘ wobei durch die Pumpe und das Wassererhitzungsmittel im Wasserbehälter enthaltenes Wasser erhitzbar und in die Brühkammer förderbar ist,
- einen Getränkeauslass, (5) aus welchem das in der Brühkammer aus dem erhitzten Wasser gebrühte Getränk in ein darunter abgestelltes Trinkgefass gelangt,
- einen nach oben offenen, entfernbaren Auffangbehälter (9), der in einer Ausgangsstellung unter der Brühkammer angeordnet und zur Aufnahme von verbrauchten, aus der Brühkammer ausgeworfenen Portionskapseln eingerichtet ist, **dadurch gekennzeichnet, dass**
der Auffangbehälter (9) flüssigkeitsdicht ist und zwischen der Ausgangsstellung und einer Flüssigkeitsaufnahmestellung, in welcher er positionsstabil unterhalb des Getränkeauslasses (5) angeordnet ist, bewegbar ist.

2. Getränkezubereitungsmaschine nach Anspruch 1, wobei sich der Auffangbehälter (9) in der Flüssigkeitsaufnahmestellung von in horizontaler Richtung vor dem Getränkeauslass bis hinter eine Frontfläche (10) erstreckt, welche Frontfläche (10) gebildet wird, wenn sich der Kapselbehälter (9) in der Ausgangsstellung befindet.

3. Getränkezubereitungsmaschine nach Anspruch 1 oder 2, wobei der Auffangbehälter (9) zwischen der Ausgangsstellung und der Flüssigkeitsaufnahmestellung geführt bewegbar ist.

4. Getränkezubereitungsmaschine nach Anspruch 3, wobei der Auffangbehälter (9) zwischen der Ausgangsstellung und der Flüssigkeitsaufnahmestellung seitlich geführt linear bewegbar ist.

5. Getränkezubereitungsmaschine nach einem der vorangehenden Ansprüche, wobei der Auffangbehälter (9) in der Flüssigkeitsaufnahmestellung teilweise auf einer Abstellfläche (3) ruht, die eingerichtet ist, in einem Betriebszustand der Getränkezubereitungsmaschine ein mit dem Getränk zu befüllendes Trinkgefäss aufzunehmen.

6. Getränkezubereitungsmaschine nach einem der vorangehenden Ansprüche, wobei sich der Auffangbehälter (9) in der Flüssigkeitsaufnahmestellung unmittelbar unter den Getränkeauslass (5) erstreckt.

7. Getränkezubereitungsmaschine nach einem der vorangehenden Ansprüche, aufweisend eine Steuerung, welche über eine Bedienungsinformation (11) verfügt und eingerichtet ist, einen Benutzer über eine Ein- und Ausgabeeinrichtung (22) anzuleiten, den Auffangbehälter für einen Entkalkungsprozess und/oder einen Reinigungsprozess in die Flüssigkeitsaufnahmestellung zu bringen.

8. Getränkezubereitungsmaschine nach einem der vorangehenden Ansprüche mit einer Steuerung, die eingerichtet ist, ein Entkalkungs- und/oder ein Reinigungsprogramm durchzuführen, in welchem in einem vorgesehen Ablauf Flüssigkeit gefördert wird, wobei die während dieses Programms geförderte Flüssigkeitsmenge auf ein Auffangbehälter-Füllvolumen abgestimmt ist.

9. Getränkezubereitungsmaschine nach einem der vorangehenden Ansprüche, wobei der Auffangbehälter (9) so dimensioniert ist, dass ein Auffangbehälter-Füllvolumen mindestens einem Nutzvolumen des Wasserbehälters (7) entspricht.

10. Getränkezubereitungsmaschine nach einem der vorangehenden Ansprüche, aufweisend einen Sensor (12), welcher detektiert, ob sich der Auffangbehälter in der Flüssigkeitsaufnahmestellung befindet.

11. Verfahren zum Entkalken oder Reinigung einer Getränkezubereitungsmaschine (1) zum Zubereiten eines Getränks aus einer Portionskapsel mit einer eine Brühkammer zum Einlegen der Portionskapsel, einen Wasserbehälter (7), eine Pumpe (31), ein Wassererhitzungsmittel (32), einen Getränkeauslass (5) und einen nach oben offenen, entfernbaren Auffangbehälter (9), der in einer Ausgangsstellung unter der Brühkammer angeordnet und zur Aufnahme von verbrauchten, aus der Brühkammer ausgeworfenen Portionskapseln eingerichtet ist, **gekennzeichnet dadurch, dass** der Auffangbehälter (9) flüssigkeitsdicht ist, und durch einen Verfahrensschritt, in welchem der Auffangbehälter aus der Ausgangsstellung in eine Flüssigkeitsaufnahmestellung bewegt wird, in welcher vom Getränkeauslass (5) abgegebene Flüssigkeit in den Auffangbehälter (9) gelangt, wobei dieser Verfahrensschritt durchgeführt wird, bevor eine Entkalkungs- und/oder Reinigungsflüssigkeit von der Pumpe durch die Brühkammer gefördert und über den Getränkeauslass (5) abgegeben wird.

## Claims

1. A drinks preparation machine (1) for preparing a drink from a portion capsule, comprising
- a brewing chamber for inserting the portion capsule,
- a water container (7),
- a pump (31),
- and a water heating means (32)
∘ wherein water which is contained in the water container is heatable and can be delivered into the brewing chamber by way of the pump and the water heating means;
- a drinks outlet (5), from which the drink which is brewed in the brewing chamber from the heated water gets into a drinks vessel which is placed therebelow,
- a removable capture container (9) which is open to the top and which in an initial position is arranged below the brewing chamber and is configured for receiving spent portion capsules which are ejected from the brewing chamber, **characterised in that**
the capture container (9) is liquid-tight and is movable between the initial position and a liquid-receiving position, in which it is arranged below the drinks outlet (5) in a positionally stable manner.

2. A drinks preparation machine according to claim 1, wherein the capture container (9) in the liquid-receiving position extends in the horizontal direction from in front of the drinks outlet to behind a frontal surface (10), said frontal surface (10) being formed when the capsule container (9) is located in the initial position.

3. A drinks preparation machine according to claim 1 or 2, wherein the capture container (9) is movable in a guided manner between the initial position and the liquid-receiving position.

4. A drinks preparation machine according to claim 3, wherein the capture container (9) is linearly movable in a laterally guided manner between the initial position and the liquid-receiving position.

5. A drinks preparation machine according to one of the preceding claims, wherein the capture container (9) in the liquid-receiving position partially rests on a placement surface (3) which is configured to receive a drinks vessel which is to be filled with the drink, in an operating state of the drinks preparation machine.

6. A drinks preparation machine according to one of the preceding claims, wherein the capture container (9) in the liquid-receiving position extends directly below the drinks outlet (5).

7. A drinks preparation machine according to one of the preceding claims, comprising a control which has operating information (11) and is configured to instruct the user, via an input and output device (22), to bring the capture container into the liquid-receiving position for a descaling process and/or a cleaning process.

8. A drinks preparation machine according to one of the preceding claims, with a control which is configured to carry out a descaling program and/or a cleaning program, in which liquid is delivered in an envisaged sequence, wherein the liquid quantity which is delivered during this program is matched to a capture container filling volume.

9. A drinks preparation machine according to one of the preceding claims, wherein the capture container (9) is dimensioned such that a capture container filling volume corresponds at least to a useable volume of the water container (7).

10. A drinks preparation machine according to one of the preceding claims, comprising a sensor (12) which detects whether the capture container is situated in the liquid-receiving position.

11. A method for descaling or cleaning a drinks preparation machine (1) for preparing a drink from a portion capsule, with a brewing chamber for inserting the portion capsule, a water container (7), a pump (31), a water heating means (32), a drinks outlet (5) and a removable capture container (9) which is open to the top and which in an initial position is arranged below the brewing chamber and is configured to receive spent portion capsules which are ejected from the brewing chamber, **characterised in that** the capture container (9) is liquid-tight, and by a method step, in which the capture container is moved out of the initial position into a liquid-receiving position, in which liquid which is delivered from the drinks outlet (5) gets into the capture container (9), wherein this method step is carried out before a descaling liquid and/or cleaning liquid, by way of the pump, is delivered through the brewing chamber and issued via the drinks outlet (5).

## Revendications

1. Machine (1) de préparation de boissons destinée à préparer une boisson à partir d'une capsule de portion, la machine présentant :
une chambre d'infusion dans laquelle est placée la capsule de portion,
un récipient (7) à eau,
une pompe (31) et
un moyen (32) de chauffage de l'eau,
l'eau contenue dans le récipient à eau pouvant être chauffée par le moyen de chauffage d'eau et transportée par la pompe dans la chambre d'infusion,
une sortie (5) de boisson par laquelle la boisson infusée par l'eau chaude dans la chambre d'infusion est amenée dans un récipient de boisson posé en dessous,
un récipient de reprise (9) ouvert dans le haut et amovible, disposé en position initiale en dessous de la chambre d'infusion et destiné à reprendre des capsules de portion usagées et expulsées hors de la chambre d'infusion,
**caractérisée en ce que**
le récipient de reprise (9) est étanche aux liquides et peut être déplacé entre la position initiale et une position de reprise de liquide dans laquelle il est disposé de manière stable en dessous de la sortie (5) de boisson.

2. Machine de préparation de boissons selon la revendication 1, dans laquelle le récipient (9) s'étend dans la position de reprise de liquide depuis devant la sortie de boisson jusque derrière une surface frontale (10) dans la direction horizontale, la surface frontale (10) étant formée lorsque le récipient (9) à capsule est en position initiale.

3. Machine de préparation de boissons selon les revendications 1 ou 2, dans laquelle le récipient (9) est guidé de manière à se déplacer entre la position initiale et la position de reprise de liquide.

4. Machine de préparation de boissons selon la revendication 3, dans laquelle le récipient (9) peut être déplacé linéairement entre la position initiale et la position de reprise de liquide en étant guidé latéralement.

5. Machine de préparation de boissons selon l'une des revendications précédentes, dans laquelle lorsque le récipient (9) est en position de reprise de liquide, il repose en partie sur une surface de pose (3) destinée à reprendre un récipient de boisson à remplir de boisson lorsque la machine de préparation de boissons est en situation de fonctionnement.

6. Machine de préparation de boissons selon l'une des revendications précédentes, dans laquelle le récipient (9) s'étend directement en dessous de la sortie (5) de boisson lorsqu'il est en position de reprise de liquide.

7. Machine de préparation de boissons selon l'une des revendications précédentes, présentant une commande qui disposé d'informations de service (11) et est destinée à inviter par l'intermédiaire d'un dispositif (22) d'introduction et de sortie un utilisateur à amener le récipient de reprise en position de reprise de liquide pour une opération de détartrage et/ou une opération de nettoyage.

8. Machine de préparation de boissons selon l'une des revendications précédentes, présentant une commande destinée à réaliser un programme de détartrage et/ou un programme de nettoyage dans lequel du liquide est transporté dans un déroulement prévu, le débit de liquide transporté pendant ce programme étant accordé au volume de remplissage du récipient de reprise.

9. Machine de préparation de boissons selon l'une des revendications précédentes, dans laquelle le récipient (9) est dimensionné de telle sorte que le volume de remplissage du récipient de reprise corresponde au moins au volume utile du récipient (7) à eau.

10. Machine de préparation de boissons selon l'une des revendications précédentes, présentant un capteur (12) qui détecte si le récipient de reprise se trouve en position de reprise de liquide.

11. Procédé de détartrage ou de nettoyage d'une machine (1) de préparation de boissons destinée à préparer une boisson à partir d'une capsule de portion et présentant une chambre d'infusion dans laquelle est placée la capsule de portion, un récipient (7) à eau, une pompe (31), un moyen (32) de chauffage de l'eau, une sortie (5) de boisson et un récipient de reprise (9) ouvert dans le haut et amovible, disposé en position initiale en dessous de la chambre d'infusion et destiné à reprendre des capsules de portion usagées et expulsées hors de la chambre d'infusion,
**caractérisé en ce que**
le récipient de reprise (9) est étanche aux liquides et dans une étape peut être déplacé entre la position initiale et une position de reprise de liquide dans laquelle il est disposé de manière stable en dessous de la sortie (5) de boisson, cette étape étant exécutée avant qu'un liquide de détartrage et/ou de nettoyage soit refoulé par la pompe dans la chambre d'infusion et délivré par la sortie (5) de boisson.
